# EUROPEAN PATENT APPLICATION

(11) **EP 4 600 515 A1**
(43) Date of publication of application: **13.08.2025**
(21) Application number: 22961533.1
(22) Date of filing: 26.10.2022
(51) Int. Cl.: F16C 11/06, F16C 11/08, B60G 7/00

(54) **CAULKING-TYPE SLIDING BUSH AND MANUFACTURING METHOD THEREFOR**

(30) Priority: 06.10.2022 KR 20220127682
(71) Applicant: CTR Co., Ltd, Changwon-si, Gyeongsangnam-do 51557 (KR)
(72) Inventor: PARK, Chul Min, Changwon-si Gyeongsangnam-do 51557 (KR); SON, Byeong Seok, Changwon-si Gyeongsangnam-do 51557 (KR)
(74) Representative: Habermann, Hruschka & Schnabel
(86) International application number: PCT/KR2022/016433
(87) International publication number: WO 2024/075889

(57) **Abstract**

An embodiment of a caulking-type sliding bush includes: an inner sleeve made of a metal material and composed of a ball portion, and a first stud portion and a second stud portion extending up and down from the ball portion; a ball seat made of a plastic material, surrounding an outer surface of the inner sleeve, and absorbing vibration and shock due to rotational motion of the inner sleeve; a middle sleeve made of a metal material, and surrounding and supporting an outer surface of the ball seat; a cushioning member made of a rubber material, surrounding an outer surface of the middle sleeve, and absorbing vibration and shock due to oscillatory motion of the inner sleeve; an outer sleeve made of a metal material, and surrounding and supporting an outer surface of the cushioning member; and a pair of plug-integrated oil seals coupled to outer surfaces of end portions of the inner sleeve, end surfaces of end portions of the ball seat, and inner surfaces of end portions of the middle sleeve, and fixed in close contact by caulking portions formed by bending end portions of the middle sleeve.

## Description

### Technical Field

The present disclosure relates to a caulking-type sliding bush and a method of manufacturing the caulking-type sliding bush. In more detail, the present disclosure relates to a caulking-type sliding bush for improving ride comfort by absorbing vibration and shock generated during vehicle driving, and a method of manufacturing the caulking-type sliding bush.

### Background Art

In general, sliding bushes and cross axis ball joints are provided at the connection between the vehicle body and suspension components and are used to absorb vibration and shock transmitted from the road surface to improve ride comfort.

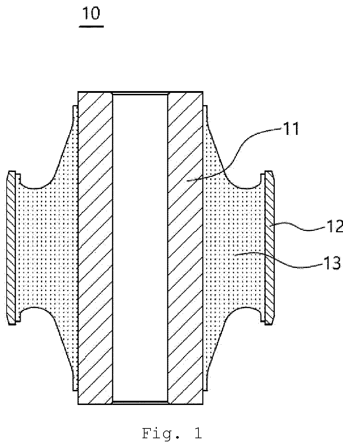

Referring to FIG. 1, a bush 10 of the related art includes a rubber member 13 that absorbs shock between an inner sleeve 11 and an outer sleeve 12. The rubber member 13 is bonded to the inner sleeve 11 and the outer sleeve 12, which are made of metal, and serves to absorb vibration and shock due to rotational and oscillatory motion of the inner sleeve 11 between the component connected to the inner sleeve 11 and the component connected to the outer sleeve 12.

The rubber member 13 included in the bush 10 of the related art has the advantage of being able to improve ride comfort due to its excellent vibration and shock absorption performance that arises from the characteristics of the rubber material. However, its strength is low, so it has the disadvantage that twisting is generated due to sustained vibration and shock, thereby resulting in damage in highly deformed areas and reducing durability. In particular, there is the problem that the durability in the rotational direction is weak.

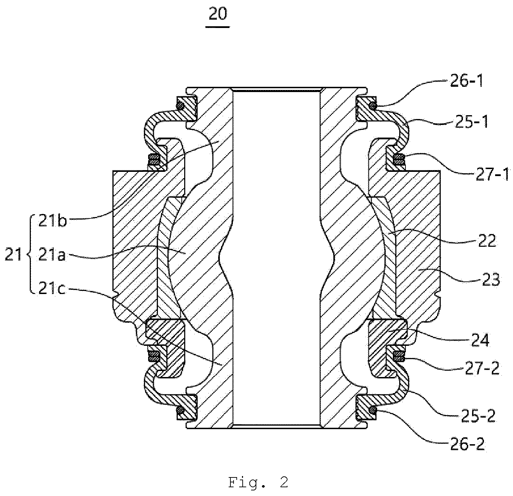

Referring to FIG. 2, a cross axis ball joint 200 of the related art includes: a pillow ball 21 made of a metal material and composed of a spherical portion 21a, and a first bridge 21b and a second bridge 21c extending from both sides of the spherical portion 21a; a ball seat 22 made of a plastic material, surrounding the outer surface of the spherical portion 21a, and absorbing vibration and shock due to rotational and oscillatory motion of the pillow ball 21; a socket 23 made of a metal material, surrounding the outer surface of the ball seat 22, and supporting the ball seat 22; a plug 24 fixedly installed on the socket 23 and preventing separation of the ball seat 22; boots 25-1 and 25-2 sealing the space between the pillow ball 21 and the socket 23 with both ends supported on the first bridge 21b and a side of the socket 23 and on the second bridge 21c and the plug 24; and first fastening rings 26-1 and 26-2 and second fastening rings 27-1 and 27-2 for fixing both ends of the boots 25-1 and 25-2 to both ends of the pillow ball 21, a side of the socket 23, and the plug 24, respectively.

Since the ball joint 22 is made of a plastic material with high strength, the cross axis ball joint 20 of the related art described above has the defect that it is possible to secure durability by being resistant to damage even under sustained vibration and shock resulting from rotational and oscillatory motion of the pillow ball 21, but has the disadvantage that, due to the inherent characteristics of plastic materials, it suffers from low vibration and shock absorption performance, so ride comfort is deteriorated.

Further, according to the cross axis ball joint 20 of the related art, since both ends of the pillow ball 21 should protrude outward further than the installation position of the socket 23 or the plug 24 in order to install the boots 25-1 and 25-2 sealing the space between the pillow ball 21 and the socket 23, there is the defect that the length of the pillow ball 21 increases accordingly, which results in poor installability in a vehicle. Further, the cross axis ball joint 20 of the related art has the defect that its structure and manufacturing process are complex, and its manufacturing cost is high because it is an assembly of multiple components.

Prior art related to such sliding bush and cross-axis ball joint of the related art is disclosed in Korean Patent No. 10-2405188.

### Disclosure

### Technical Problem

The present disclosure has been made in an effort to solve the problems described above and an objective of the present disclosure is to provide a caulking-type sliding bush that can reduce the manufacturing cost by simplifying the configuration and assembly structure of parts while improving durability of the parts and the performance of absorbing vibration and shock generated by rotational and oscillatory motion of an inner sleeve and that can improve installability in a vehicle by reducing the length of the inner sleeve, and a method of manufacturing the caulking-type sliding bush.

### Technical Solution

In order to achieve the objectives described above, a caulking-type sliding bush of the present disclosure includes: an inner sleeve made of a metal material and composed of a ball portion, and a first stud portion and a second stud portion extending up and down from the ball portion; a ball seat made of a plastic material, surrounding an outer surface of the inner sleeve, and absorbing vibration and shock due to rotational motion of the inner sleeve; a middle sleeve made of a metal material, and surrounding and supporting an outer surface of the ball seat; a cushioning member made of a rubber material, surrounding an outer surface of the middle sleeve, and absorbing vibration and shock due to oscillatory motion of the inner sleeve; an outer sleeve made of a metal material, and surrounding and supporting an outer surface of the cushioning member; and a pair of plug-integrated oil seals coupled to outer surfaces of end portions of the inner sleeve, end surfaces of end portions of the ball seat, and inner surfaces of end portions of the middle sleeve, and fixed in close contact by caulking portions formed by bending end portions of the middle sleeve.

An inner surface of the ball seat may be in contact with the ball portion of the inner sleeve, and outer surfaces of the first stud portion and the second stud portion.

When the inner sleeve is oscillated, the inner sleeve, the ball seat, the middle sleeve, and the plug-integrated oil seals may be oscillated together as an integrated assembly, and the cushioning member may absorb vibration and shock generated when the integrated assembly is oscillated.

The plug-integrated oil seals may be composed of a pair of plugs being in contact with the end surfaces of the end portions of the ball seat and the inner surfaces of the end portions of the middle sleeve, and a pair of oil seals integrated with the plugs and being in contact with the outer surfaces of the end portions of the inner sleeve and the end surfaces of the end portions of the ball seat; and the caulking portions formed by bending the end portions of the middle sleeve may be in close contact with end surfaces of the plugs, inner ends of the caulking portions may be in close contact with each other in contact with outer ends of the oil seals, whereby the caulking portions and the oil seals may surround and seal the plugs.

End surfaces of the caulking portions and end surfaces of the oil seals may be positioned at the same height and connected to each other to form a plane.

A method of manufacturing a caulking-type sliding bush of the present disclosure may include: a rubber vulcanization step of forming a rubber cushioning member between a middle sleeve and an outer sleeve disposed outside the middle sleeve through injection molding; assembling a ball seat made of a plastic material to surround a ball portion an inner sleeve and outer surfaces of a first stud portion and a second stud portion extending up and down from the ball portion; inserting an assembly of the inner sleeve and the ball seat into the middle sleeve; assembling a pair of oil seals to outer surfaces of end portions of the inner sleeve, end surfaces of end portions of the ball seat, and inner surfaces of end portions of the middle sleeve; and caulking the end portions of the middle sleeve by bending the end portions to come in close contact with end surfaces of the plug-integrated oil seals.

### Advantageous Effects

According to the caulking-type sliding bush and the method of manufacturing a caulking-type sliding bush of the present disclosure, a ball seat made of a plastic material is provided between an inner sleeve and a middle sleeve to absorb rotational motion of the inner sleeve, thereby being able to increase the durability of the part, and a cushioning member made of a rubber material is provided between the middle sleeve and an outer sleeve to absorb oscillatory motion of the inner sleeve, thereby being able to improve ride comfort.

Further, plug-integrated oil seals are assembled to both ends of the ball seat and both ends of the middle sleeve are finished through caulking, so it is possible to simplify the configuration and assembly structure of parts, whereby it is possible to reduce the manufacturing cost and improve installability in a vehicle by reducing the length of the inner sleeve.

Further, since the ball seat made of a plastic material is configured to surround and support not only a ball portion of the inner sleeve, but a first stud portion and a second stud portion having a straight section, it is possible to support the entire section of the inner sleeve with higher strength when the inner sleeve is rotated and oscillated, so the inner sleeve, the ball seat, and the middle sleeve are integrally oscillated. Further, such oscillatory motion is absorbed by a cushioning member made of a rubber material and disposed outside them, so it is possible to more effectively reduce vibration and noise by removing friction and collision factors between components.

### Description of Drawings

FIG. 1 is a cross-sectional view of a sliding bush of the related art.
FIG. 2 is a cross-sectional view of a cross axis ball joint of the related art.
FIG. 3 is a cross-sectional view of a caulking-type sliding bush of the present disclosure.
FIG. 4 is an exploded perspective view illustrating a method of manufacturing a caulking-type sliding bush according to the present disclosure.
FIG. 5 is a flowchart showing the method of manufacturing a caulking-type sliding bush according to the present disclosure.

**Description of Reference Numerals**

| | | | |
|---|---|---|---|
| 10 : | bush | 11 : | inner sleeve |
| 12 : | outer sleeve | 13 : | rubber member |
| 20 : | cross axis ball joint | 21 : | Pillow ball |
| 21a : | spherical portion | 21b : | first bridge |
| 21c : | second bridge | 22 : | ball seat |
| 23 : | socket | 23a : | boot fastening portion |
| 24 : | plug | 24a : | boot fastening portion |
| 25-1,25-2 : | boot | 26-1,26-2 : | first fastening ring |
| 27-1,27-2 : | second fastening ring | 100 : | caulking-type sliding bush |
| 110 : | inner sleeve) | 111 : | ball portion |
| 112 : | first stud | 113 : | second stud |
| 120 : | ball seat | 121 : | ball portion-supporting portion |
| 122 : | first stud portion-supporting portion | 123 : | second stud portion-supporting portion |
| 130 : | middle sleeve | 131-1 : | first caulking portion |
| 131-2 : | second caulking portion | 131-1' : | end of middle sleeve |
| 131-2' : | another end of middle sleeve | 140-1 : | first plug-integrated oil seal |
| 140-2 : | second plug-integrated oil seal | 140a,140b : | bending portion |
| 141-1 : | first plug | 141-2 : | second plug |
| 142-1 : | first oil seal | 142-2 : | second oil seal |
| 150 : | cushioning member | 160 : | outer sleeve |
| C : | central axis | | |

### Mode for Invention

Hereafter, the configuration and operation of a preferred embodiment of the present disclosure is described in detail with reference to the accompanying drawings. Hereafter, in referring to directions in the specification, "inner" refers to the centripetal direction toward a central axis C, "outer" refers to the centrifugal direction opposite to the centripetal direction toward the central axis C, and "end" is used to refer to the upper and lower ends in the longitudinal direction of a sliding bush 100.

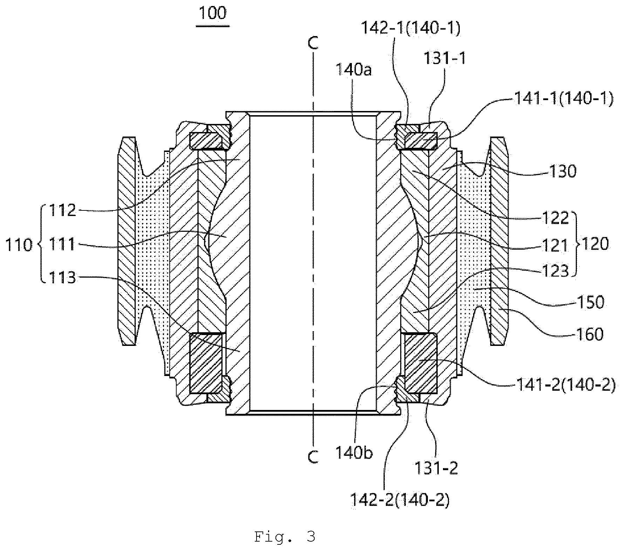

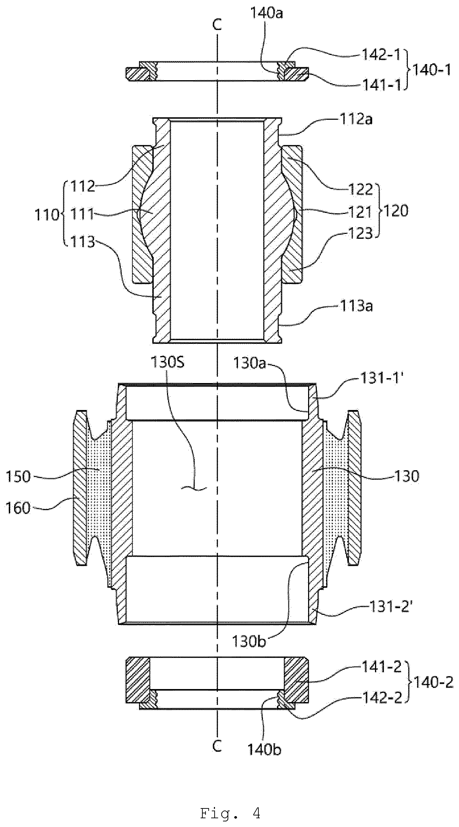

Referring to FIG. 3 and FIG. 4, a caulking-type sliding bush 100 of the present disclosure includes: an inner sleeve 110 made of a metal material; a ball seat 120 made of a plastic material and surrounding the inner sleeve 110; a middle sleeve 130 made of a metal material and surrounding the ball seat 120; a cushioning member 150 made of a rubber material and surrounding the middle sleeve 130; an outer sleeve 160 made of a metal material and surrounding the cushioning member 150; and a pair of plug-integrated oil seals 140-1 and 140-2 fixedly supporting the ball seat 120 and the middle sleeve 130 and preventing leakage of a lubricant provided between the outer surface of the inner sleeve 110 and the inner surface of the ball seat 120.

The inner sleeve 110 is connected to parts constituting the suspension system of a vehicle and is capable of rotating and oscillating, and is composed of a ball portion 111 formed in a spherical shape with a convex outer surface, and a first stud portion 112 and a second stud portion 113 extending up and down from the ball portion 111, respectively, and formed in a cylindrical shape. Oil seal coupling grooves 112a and 113a in which the oil seals 142-1 and 142-2 are formed on the outer surface of the end portion of the first stud portion 112 and the outer surface of the end portion of the second stud portion 113.

The ball seat 120 is made of a plastic material, surrounds the inner sleeve 110, and serves to absorb vibration and shock due to rotational motion of the inner sleeve and absorb lateral pressure applied by the inner sleeve 110.

The ball seat 120 is composed of a ball portion-supporting portion 121 being in contact with a ball portion 111 of the inner sleeve 110 so that it can be in contact with the ball portion 111 and the outer surfaces of the first stud portion 112 and the second stud portion 113, a first stud portion-supporting portion 122 being in contact with the first stud portion 112, and a second stud portion-supporting portion 123 being in contact with the second stud portion 113.

The ball seat 120 is made of a plastic material, may be separately formed and then fitted on the outer surface of the inner sleeve 110, or may be formed on the outer surface of the inner sleeve 110 by injection molding.

Since the ball seat 120 made of a plastic material is disposed on the outer surface of the inner sleeve 110, it is not easily damaged even under sustained vibration and shock due to rotational and oscillatory motion of the inner sleeve 110, so the durability of the ball seat 120 can be increased.

Further, since the ball seat 120 made of a plastic material surrounds and supports not only the ball portion 111 of the inner sleeve 110, but also the first stud portion 112 and the second stud portion 113 having a straight cross-sectional section, the inner surface of the ball seat 120 can secure a wide contact area from the ball part 111 of the inner sleeve 110 and the outer surfaces of the first stud portion 112 and the second stud portion 113. Accordingly, when the inner sleeve 110 is rotated and oscillated, the entire section of the inner sleeve 110 can be supported with higher strength.

The middle sleeve 130 supports the outer surface of the ball seat 120 and is disposed between the outer surface of the ball seat 120 and the inner surface of the cushioning member 150, thereby serving to support the inner surface of the cushioning member 150.

Both end portions 131-1' and 131-2' of the middle sleeve 130 form caulking portions 131-1 and 131-2 bent by caulking, thereby serving to fixedly support the pair of plug-integrated oil seals 140-1 and 140-2. Plug coupling grooves 130a and 130b in which plugs 141-1 and 141-2 are seated are formed on the inner surfaces of both end portions of the middle sleeve 130.

The plug-integrated oil seals 140-1 and 140-2 are coupled to the outer surfaces of the end portions of the inner sleeve 110, the end surfaces of the end portions of the ball seat 120, and the inner surfaces of the end portions of the middle sleeve 130, and are fixed under pressure by caulking portions 131-1 and 131-2 of the middle sleeve 130.

The plug-integrated oil seals 140-1 and 140-2 are composed of a pair of plugs 141-1 and 141-2 being in contact with the end surfaces of the end portions of the ball seat 120 and the inner surfaces of the end portions of the middle sleeve 130, and a pair of oil seals 142-1 and 142-2 integrated with the plugs 141-1 and 141-2 and being in contact with the outer surfaces of the end portions of the inner sleeve 110 and the end surfaces of the end portions of the ball seat 120.

Corrugated curved portions 140a and 140b may be formed on the inner surfaces of the pair of oil seals 142-1 and 142-2 to be able to increase the adhesion by elastically deforming upon contact with oil seal coupling grooves 112a and 113a formed on the outer surface of the end portions of the inner sleeve 110.

The caulking portions 131-1 and 131-2 formed by bending the end portions 131-1' and 131-2' of the middle sleeve 130 are in close contact with the end surfaces of the plugs 141-1 and 141-2, the inner ends of the caulking portions 131-1 and 131-2 are in close contact with each other in contact with the outer ends of the oil seals 142-1 and 142-2, whereby the caulking portions 131-1 and 131-2 and the oil seals 142-1 and 142-2 form a sealed structure while surrounding the plugs 141-1 and 141-2, thereby being able to more securely prevent leakage of a lubricant.

In this way, by assembling the plug-integrated oil seals 140-1 and 140-2 and finishing by caulking the end portions 131-1' and 131-2' of the middle sleeve 130, the configuration and assembly structure of parts can be simplified, whereby it is possible to reduce the manufacturing cost. Further, since a structure that seals components can be achieved through only caulking, as compared with the related art shown in FIG. 2, it is possible to improve installability in a vehicle by reducing the length of the inner sleeve 110.

Further, when the inner ends of the caulking portions 131-1 and 131-2 and the outer ends of the oil seals 142-1 and 142-2 are in contact with each other, the end surfaces of the caulking portions 131-1 and 131-2 and the end surfaces of the oil seals 142-1 and 142-2 are positioned at the same height and connected to each other to form a plane, whereby it is possible to form a smooth external appearance.

The cushioning member 150 is made of a rubber material and surrounds the middle sleeve 130, thereby serving to improve ride comfort by absorbing vibration and shock due to oscillatory motion of the inner sleeve 110 and absorbing axial and lateral pressures.

The outer sleeve 160 is made of a metal material, supports the outer surface of the cushioning member 150, and can be fixed to the car body of a vehicle.

When the inner sleeve 110 is oscillated, the inner sleeve 110, the ball seat 120, the middle sleeve 130, and the plug-integrated oil seals 140-1 and 140-2 are oscillated together as an integrated assembly, and the cushioning member 150 can vibration and shock due to the oscillatory motion of the integrated assembly.

Since the ball seat 120 made of a plastic material is configured to surround and support not only the ball portion 111 of the inner sleeve 110, but the first stud portion 112 and the second stud portion 113 having a straight cross-sectional section, it is possible to support the entire section of the inner sleeve 110 with higher strength when the inner sleeve 110 is rotated and oscillated, so the inner sleeve 110, the ball seat 120, and the middle sleeve 130 can be integrally oscillated. Further, such oscillatory motion is absorbed by the cushioning member 150 made of a rubber material disposed outside, so it is possible to more effectively reduce vibration and noise by removing the friction and collision factors between components.

If the ball seat 120 is configured to support and surround only the ball portion 111 of the inner sleeve 110, when the inner sleeve 110 is oscillated, the ball seat 120 and the middle sleeve 130 are not oscillated with the inner sleeve 110 or the range of the oscillatory motion is limited at a low level, so the performance of absorbing vibration and shock generated by oscillatory motion of the inner sleeve 110 is deteriorated, and the inner sleeve 110, the ball seat 120, and the middle sleeve 130 are individually moved without integrally moving, whereby there are friction and collision factors between the parts, and accordingly, vibration and noise may be caused.

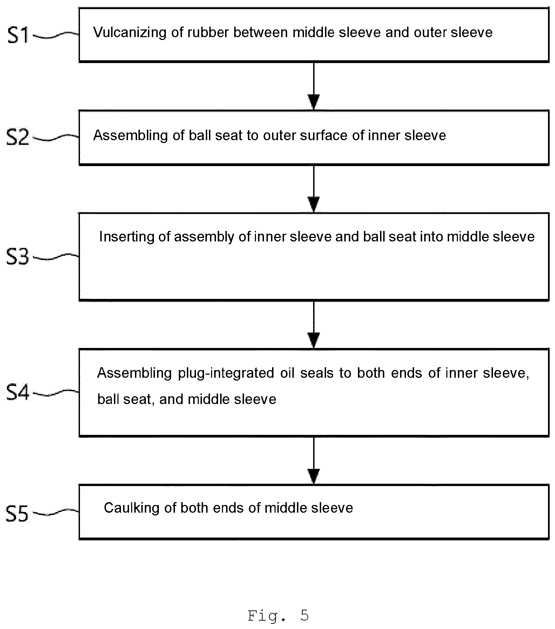

Hereafter, a method of manufacturing the caulking-type sliding bush 100 according to the present disclosure is described with reference to FIG. 4 and FIG. 5.

First, a rubber vulcanization step S1 of forming the rubber cushioning member 150 between the middle sleeve 130 and the outer sleeve 160 disposed outside the middle sleeve through injection molding is performed.

As a process separate from this, the ball seat 120 made of a plastic material is assembled to surround the ball portion 111 of the inner sleeve 110 and the outer surfaces of the first stud portion 112 and the second stud portion 113 extending up and down from the ball portion 111 (S2). The ball seat 120 made of a plastic material may be separately formed and then fitted on the outer surface of the inner sleeve 110, or may be formed on the outer surface of the inner sleeve 110 by injection molding.

Steps S1 and S2 may be performed in either order.

As a next step, the assembly of the inner sleeve 110 and the ball seat 120 are inserted and assembled into the inside 130a of the middle sleeve 130 (S3).

Next, the oil seals 140-1 and 140-2 are assembled to the outer surfaces of the end portions of the inner sleeve 110, the end surfaces of the end portions of the ball seat 120, and the inner surfaces of the end portions of the middle sleeve 130 (S4).

As a final step, the caulking portions 131-1 and 131-2 are formed to come in close contact with the end surfaces of the plug-integrated oil seals 140-1 and 140-2 by bending the end portions of the middle sleeve 130.

As described above, the present disclosure is not limited to the embodiment described above, and modifications apparent to those skilled in the art may be made without departing from the spirit of the present disclosure as claimed in the claims. Such modifications fall within the scope of the present disclosure.

## Claims

1. A caulking-type sliding bush comprising:
an inner sleeve made of a metal material and composed of a ball portion, and a first stud portion and a second stud portion extending up and down from the ball portion;
a ball seat made of a plastic material, surrounding an outer surface of the inner sleeve, and absorbing vibration and shock due to rotational motion of the inner sleeve;
a middle sleeve made of a metal material, and surrounding and supporting an outer surface of the ball seat;
a cushioning member made of a rubber material, surrounding an outer surface of the middle sleeve, and absorbing vibration and shock due to oscillatory motion of the inner sleeve;
an outer sleeve made of a metal material, and surrounding and supporting an outer surface of the cushioning member; and
a pair of plug-integrated oil seals coupled to outer surfaces of end portions of the inner sleeve, end surfaces of end portions of the ball seat, and inner surfaces of end portions of the middle sleeve, and fixed in close contact by caulking portions formed by bending end portions of the middle sleeve.

2. The caulking-type sliding bush of claim 1, wherein an inner surface of the ball seat is in contact with the ball portion of the inner sleeve, and outer surfaces of the first stud portion and the second stud portion.

3. The caulking-type sliding bush of claim 2, wherein when the inner sleeve is oscillated, the inner sleeve, the ball seat, the middle sleeve, and the plug-integrated oil seals are oscillated together as an integrated assembly, and
the cushioning member absorbs vibration and shock generated when the integrated assembly is oscillated.

4. The caulking-type sliding bush of claim 1, wherein the plug-integrated oil seals are composed of a pair of plugs being in contact with the end surfaces of the end portions of the ball seat and the inner surfaces of the end portions of the middle sleeve, and a pair of oil seals integrated with the plugs and being in contact with the outer surfaces of the end portions of the inner sleeve and the end surfaces of the end portions of the ball seat; and
the caulking portions formed by bending the end portions of the middle sleeve are in close contact with end surfaces of the plugs, inner ends of the caulking portions are in close contact with each other in contact with outer ends of the oil seals, whereby the caulking portions and the oil seals surround and seal the plugs.

5. The caulking-type sliding bush of claim 4, wherein end surfaces of the caulking portions and end surfaces of the oil seals are positioned at the same height and connected to each other to form a plane.

6. A method of manufacturing a caulking-type sliding bush, comprising:
a rubber vulcanization step of forming a rubber cushioning member between a middle sleeve and an outer sleeve disposed outside the middle sleeve through injection molding;
assembling a ball seat made of a plastic material to surround a ball portion an inner sleeve and outer surfaces of a first stud portion and a second stud portion extending up and down from the ball portion;
inserting an assembly of the inner sleeve and the ball seat into the middle sleeve;
assembling a pair of oil seals to outer surfaces of end portions of the inner sleeve, end surfaces of end portions of the ball seat, and inner surfaces of end portions of the middle sleeve; and
caulking the end portions of the middle sleeve by bending the end portions to come in close contact with end surfaces of the plug-integrated oil seals.
